# EUROPÄISCHE PATENTSCHRIFT

(11) **EP 1 535 719 B1**
(45) Veröffentlichungstag und Bekanntmachung des Hinweises auf die Patenterteilung: **28.03.2007**
(21) Anmeldenummer: 04024259.6
(22) Anmeldetag: 12.10.2004
(51) Int. Cl.: B29C 49/56

(54) **Vorrichtung zur Blasformung von Behältern**
Device for blow-molding containers
Dispositif pour mouler des récipients par soufflage

(30) Priorität: 21.11.2003 DE 10354506
(43) Veröffentlichungstag der Anmeldung: 01.06.2005
(73) Patentinhaber: SIG Technology Ltd., 8212 Neuhausen Rhine Falls (CH)
(72) Erfinder: Choinsky, Julian, 22359 Hamburg (DE); Linke, Michael, 22926 Ahrensburg (DE); Vogel, Klaus, 22885 Barsbüttel (DE); von Hamme, Thomas, Dr., 24629 Kisdorf (DE)
(74) Vertreter: Klickow, Hans-Henning

(56) Entgegenhaltungen:
- WO-A1-20/05002821
- US-A- 3 608 152
- US-A- 3 825 396
- US-A- 4 626 190
- PATENT ABSTRACTS OF JAPAN Bd. 018, Nr. 598 (M-1704), 15. November 1994 (1994-11-15) & JP 06 226826 A (JAPAN STEEL WORKS LTD:THE), 16. August 1994 (1994-08-16) -& DATABASE WPI Section Ch, Week 199437 Derwent Publications Ltd., London, GB; Class A32, AN 1994-299306 XP002319216 & JP 06 226826 A (JAPAN STEEL WORKS LTD) 16. August 1994 (1994-08-16)

## Beschreibung

Die Erfindung betrifft eine Vorrichtung zur Blasformung von Behältern, die mindestens eine Blasstation zur Umformung von thermoplastischen spritzgegossenen Vorformlingen in die Behälter aufweist und bei der die Blasstation mit mindestens zwei von Formträgern gehalterten Blasformsegmenten versehen ist und die Formträger relativ zueinander verschwenkbar angeordnet sind sowie bei der die Blasformsegmente in einem geschlossenem zustand der Blasstation entlang einer Trennebene angeordnet und von mindestens einem Verriegelungselement relativ zueinander fixiert sind.

Bei einer derartigen Behälterformung durch Blasdruckeinwirkung werden Vorformlinge aus einem thermoplastischen Material, beispielsweise Vorformlinge aus PET (Polyethylenterephtalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE - OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist entsprechend der DE-A 42 12 583 eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Aufgrund von bei der Blasformung der Vorformlinge in die Behälter auf die Blasstation einwirkender erheblicher Innendrücke ist es erforderlich, eine ungewollte Öffnung der Blasformsegmente bei der Durchführung des Blasformvorganges zu verhindern. Hierzu erfolgt in der Regel eine Verriegelung der Blasformsegmente relativ zueinander durch mechanische Verriegelungselemente. Typischerweise bestehen derartige Verriegelungselemente aus ösenartigen Halterungselementen und Verriegelungsbolzen, die in die Ösen einführbar sind.

Bei einer Verwendung der bekannten Verriegelungsbolzen müssen diese im vorgesehenen Überdeckungsbereich vollständig aus den Verriegelungsösen herausgezogen werden, bzw. zur Durchführung der Verriegelung wieder in die Verriegelungsösen hineingeschoben werden. Die entsprechenden Hubvorgänge erfordern einen relativ großen Zeitaufwand, der die zur Verfügung stehende Prozeßzeit vermindert. Generell besteht ein Problem bei den bekannten Verriegelungssystemen darin, daß häufig die Verriegelungsbewegungen von Drehbewegungen abgeleitet werden, die sich über relativ große Umfangswinkel erstrecken und hierdurch einen entsprechenden Zeitaufwand verursachen.

Aus der JP 06226826 ist eine Vorrichtung zur Blasverformung von extrudierten Vorformlingen bekannt. Formträger sind zur Ermöglichung eines Einsetzens des Vorformlings und einer Entnahme des geblasenen Behälters parallel zu einer Trennebene verschieblich angeordnet. Ein Formträger ist mit verschwenkbaren Verriegelungselementen und der andere Formträger mit starren Gegenelementen versehen.

Die US-A-3,825,396 beschreibt ebenfalls eine Blaseinrichtung zur Verformung von extrudierten Vorformlingen. Ein Formträger ist mit einer verschwenkbaren Verriegelungseinrichtung versehen, die im verriegelten Zustand über eine Trennebene hinaus in Richtung auf den zweiten Formträger übersteht und hier in ein Gegenprofil eingreift.

Die US-A 4,626,190 zeigt ebenfalls eine Blasstation mit einem verschwenkbaren Verriegelungselement, das in ein Gegenprofil eingreift, das im Bereich eines gegenüberliegenden Formträgers angeordnet ist. Die Formträger werden zur Durchführung von Öffnungs- und Schließbewegungen relativ zueinander parallel verschoben.

In der US-A-3,608,152 wird eine Formeinrichtung unter Verwendung von Spritzguß- oder Vulkanisierformen beschrieben. Auch bei dieser Einrichtung ist ein Formträger mit einer verschwenkbaren Verriegelungseinrichtung versehen, die in ein Gegenprofil eingreift, das im Bereich eines gegenüberliegenden Formträges angeordnet ist.

Aufgabe der vorliegenden Erfindung ist es, eine Vorrichtung der einleitend genannten Art derart zu konstruieren, daß kurze Verriegelungs- und Entriegelungszeiten erreicht werden.

Diese Aufgabe wird erfindungsgemäß dadurch gelöst, daß das Verriegelungselement verschwenkbar im Bereich des ersten Formträgers angeordnet ist und daß das Verriegelungselement ein Verriegelungsprofil aufweist, das angepaßt zu einem Gegenprofil ausgebildet ist, das im Bereich eines Gegenelementes angeordnet ist, wobei sich das Gegenelement mindestens bereichsweise im verriegelten Zustand ausgehend vom zweiten Formträger in Richtung auf den ersten Formträger und über die Trennebene hinaus erstreckt.

Durch die verschwenkbare Anordnung des verriegelungselementes sowie die Profilanpassung des Verriegelungsprofils an das Gegenprofil ist es möglich, durch eine relativ geringfügige Verschwenkung des Verriegelungselementes eine Entriegelung bzw. eine Verriegelung durchzuführen. Die Erstreckung des Gegenelementes ausgehend vom zweiten Formträger in Richtung auf den ersten Formträger führt zu einer optimierten Bauteilegeometrie und damit sowohl zu einer kompakten Gestaltung als auch zu einer ausreichenden mechanischen Widerstandsfähigkeit bei kurzen Betätigungszeiten.

Eine mechanisch einfache Konstruktion wird dadurch bereitgestellt, daß das Gegenelement starr mit dem zweiten Formträger verbunden ist.

Geringe Öffnungswinkel der Blasstation werden dadurch unterstützt, daß das Gegenelement verschwenkbar mit dem zweiten Formträger verbunden ist.

Die schnelle Durchführung von Öffnungs- und Schließbewegungen wird dadurch unterstützt, daß das Verriegelungselement hebelförmig ausgebildet ist.

Gemäß einer typischen Ausführungsform ist vorgesehen, daß das Verriegelungselement hakenförmig ausgebildet ist.

Eine erhöhte mechanische Stabilität kann dadurch erreicht werden, daß das Verriegelungselement als Profilplatte ausgebildet ist.

Ebenfalls trägt es zu maximalen Öffnungswinkeln der Blasstation bei, daß das Gegenelement hebelartig ausgebildet ist.

Eine einfache mechanische Grundstruktur wird dadurch unterstützt, daß das Gegenelement hakenförmig ausgebildet ist.

Eine weitere Erhöhung der mechanischen Stabilität wird dadurch erreicht, daß das Gegenelement als Profilplatte ausgebildet ist.

Eine weitere Variante zur Profilanpassung besteht darin, daß das Gegenprofil als ein Lochprofil ausgebildet ist. Eine einfache mechanische Ansteuerbarkeit wird dadurch unterstützt, daß das Verriegelungselement um eine im wesentlichen vertikal verlaufende Schwenkachse drehbeweglich angeordnet ist.

Ein Wegschwenken des Gegenelementes aus dem Ein- und Ausgabebereich wird dadurch erleichtert, daß das Gegenelement um eine im wesentlichen in vertikaler Richtung angeordnete Schwenkachse drehbeweglich angeordnet ist.

Ein günstiger Kraftlinienverlauf kann dadurch erreicht werden, daß einander zugewandte Kraftübertragungsflächen des Verriegelungselementes und des Gegenelementes in einer Umgebung einer räumlichen Verbindungsebene zwischen Längsachsen des Schwenklagers des Verriegelungselementes sowie des Schwenklagers Gegenelementes angeordnet sind.

Zur automatischen Einnahme einer Verriegelungspositionierung wird vorgeschlagen, daß das Verriegelungselement und das Gegenelement von mindestens einer Feder relativ zueinander verspannt sind.

Eine einfache Durchführung von Öffnungs- und Schließbewegungen wird dadurch unterstützt, daß einander zugewandte Kraftübertragungsflächen des Verriegelungselementes und des Gegenelementes gekurvt konturiert sind.

Insbesondere erfolgt eine optimale Konturanpassung dadurch, daß die Kraftübertragungsflächen relativ zur Schwenkachse des Verriegelungselementes im wesentlichen konzentrisch angeordnet sind.

Eine vorteilhafte Verspannung der Formhälften relativ zueinander wird dadurch erreicht, daß die Formträger von mindestens einem Druckraum relativ zueinander verspannbar sind.

Eine weitere Optimierung von Eingabe- und Ausgabevorgängen wird dadurch erzielt, daß das Verriegelungselement relativ zu einer dem zweiten Formträger zugewandten Begrenzungsfläche des ersten Formträgers überstandsfrei angeordnet ist.

Eine hochgenaue Bewegungsvorgabe kann dadurch erfolgen, daß das Verriegelungselement mit einer Kurvensteuerung gekoppelt ist.

Darüber hinaus ist daran gedacht, daß das Gegenelement mit einer Kurvensteuerung gekoppelt ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: ein Horizontalschnitt durch eine Blasstation im verriegelten Zustand und
- Fig. 6: die Anordnung gemäß Fig. 5 in einem entriegelten sowie noch geschlossenen Zustand der Blasstation.

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Fig. 5 zeigt die Blasstation (3) mit zugeordneter Verriegelungseinrichtung (40). Die Verriegelungseinrichtung (40) besteht im wesentlichen aus einem Verriegelungselement (41), das relativ zu einem Schwenklager (42) drehbeweglich gelagert ist. Das Verriegelungselement (41) wirkt mit einem Gegenelement (44) zusammen. Das Gegenelement (44) erstreckt sich ausgehend vom Formträger (19) über eine Trennebene (43) hinaus bis in den Bereich des Formträgers (20).

Das Verriegelungselement (41) weist ein Verriegelungsprofil (45) auf, das in einem verriegelten Zustand mit einem Gegenprofil (46) zusammenwirkt, das im Bereich des Gegenelementes (44) angeordnet ist. Im verriegelten Zustand greift das Verriegelungsprofil (45) derart in das Gegenprofil (46) ein, das quer zur Trennebene (43) ein Formschluß realisiert ist.

Bei dem in Fig. 5 dargestellten Ausführungsbeispiel ist das Verriegelungselement (41) hakenförmig ausgebildet und wirkt mit einem ebenfalls hakenförmig ausgebildeten Gegenelement (44) zusammen. Das Gegenelement (44) ist bei dieser Ausführungsform darüber hinaus relativ zu einer Schwenkachse (47) drehbeweglich gelagert.

Bei einer drehbeweglichen Anordnung des Gegenelementes (44) erweist es sich als besonders vorteilhaft, wenn das Verriegelungselement (41) derart dimensioniert ist, daß es nicht über eine dem Formträger (19) zugewandte Begrenzung des Formträgers (20) hinausragt. Hierdurch wird ein relativ geringer Öffnungswinkel der Blasstation (3) für eine Entnahme der Behälter (2) sowie ein Einsetzen der Vorformlinge (1) dadurch unterstützt, daß das Gegenelement (44) aus einem Abstandsbereich zwischen den Formträgern (19, 20) weggeschwenkt werden kann und diesen Bereich für die Beladevorgänge bzw. die Entladevorgänge freigibt. Eine Bewegungskoordinierung für die Verschwenkung des Verriegelungselementes (41) und/oder des Gegenelementes (44) kann über eine mechanische Kurvensteuerung erfolgen. Grundsätzlich sind aber auch andere mechanische, pneumatische, elektrische oder sonstige Antriebe denkbar.

Zur Unterstützung einer Verschwenkung des Verriegelungselementes (41) ist ein Anlenkhebel (48) mit dem Verriegelungselement (41) verbunden. Eine Verschwenkung des Gegenelementes (44) wird durch einen Anlenkheben (49) unterstützt.

Alternativ zu der in Fig. 5 dargestellten hakenförmigen Ausbildung sowohl des Verriegelungselementes (41) als auch des Gegenelementes (44) ist beispielsweise auch daran gedacht, nur eines dieser beiden Elemente hakenförmig auszubilden und das andere Element plattenförmig zu gestalten und mit geeigneten Ausnehmungen zu versehen. Die Ausnehmungen können beispielsweise als Langlöcher oder nutartige Vertiefungen realisiert sein. Darüber hinaus ist es auch möglich, mindestens eines der Elemente plattenförmig auszubilden und in der jeweiligen Platte eine geeignete Oberflächenprofilierung vorzusehen. Ebenfalls ist es möglich sowohl das Verriegelungselement (41) als auch das Gegenelement (44) als mit aneinander angepaßten komplementären Oberflächenprofilierungen versehene Platten zu konstruieren.

Alternativ zu der in Fig. 6 dargestellten hakenförmigen Ausbildung mit im wesentlichen winkelförmigen Profilen können derartige Profile auch segmentiert bzw. mit in Richtung auf die zugeordneten Drehachsen verlaufenden Verstärkungsrippen versehen werden.

Zur Unterstützung eines Ineinandergleitens des Verriegelungsprofils (45) und des Gegenprofils (46) ist daran gedacht, einander zugewandte Flächen der Profile (45, 46) mindestens bereichsweise derart mit einem gekrümmten Verlauf zu versehen, daß relativ zu einer Mittellinie des Schwenklagers (42) eine konzentrische Anordnung vorliegt. Hierdurch kann eine Schwenkbewegung des Verriegelungselementes (41) auch in einem verriegelten Zustand in einfacher Weise reibungsarm durchgeführt werden.

Zur Unterstützung einer sicheren Verriegelung ist insbesondere daran gedacht, das Verriegelungselement (41) sowie das Gegenelement (44) relativ zueinander mit einer Federvorspannung zu versehen. Dies kann beispielsweise durch mindestens eine an mindestens einem dieser Elemente angreifende Feder realisiert werden. Gedacht ist insbesondere an die Verwendung von Druckfedern.

Die Durchführung eines Verriegelungsvorganges bzw. Entriegelungsvorganges erfolgt vorzugsweise in einem relativ zueinander unverspannten Zustand der Elemente (41, 44). Dieser spannungslose bzw. spannungsarme Zustand läßt sich beispielsweise dadurch erreichen, daß eine Dimensionierung der Elemente (41, 44) derart erfolgt, daß in einem geschlossenen Zustand der Blasstation (3) ein geringer Abstand zwischen den einander zugewandten Führungsflächen der Elemente (41, 44) realisiert ist. Eine Verspannung der Formträger (19, 20) in einem geschlossenen Zustand der Blasstation (4) erfolgt unter Verwendung mindestens eines Druckraumes (50). Wird der Druckraum (50) mit einem unter Druck stehenden Medium, beispielsweise Druckluft, beaufschlagt, so werden hierdurch die Formhälften (5, 6) gegeneinander gepreßt und die Formträger (19, 20) werden gleichzeitig mit Öffnungskräften beaufschlagt. Diese Öffnungskräfte werden von der Verriegelungseinrichtung (40) aufgenommen und führen zu einer Verspannung des Verriegelungselementes (41) relativ zum Gegenelement (40).

Fig. 6 zeigt die Anordnung gemäß Fig. 5 nach einem Verschwenken des Verriegelungselementes (41). Es ist zu erkennen, daß bereits eine relativ geringe Schwenkbewegung ausreicht, um das Gegenelement (44) vollständig freizugeben. In diesem Zustand kann die Blasstation (3) bereits geöffnet werden. Bei der im Ausführungsbeispiel veranschaulichten verschwenkbaren Lagerung des Gegenelementes (44) erfolgt gleichzeitig mit der Durchführung der Öffnungsbewegung der Formträger (19, 20) auch eine Schwenkbewegung des Gegenelementes (44) derart, daß ein Abstand zwischen den Formträgern (19, 20) freigegeben ist.

Beim dargestellten Ausführungsbeispiel sind das Verriegelungselement (41) mit seinem Verriegelungsprofil (45) in Richtung auf die Formhälften (5, 6) und das Gegenelement (44) in eine entsprechend abgewandte Richtung verschwenkbar angeordnet. Hierdurch können die beiden Schwenkbewegungen voneinander unabhängig durchgeführt werden, ohne daß gegenseitige Behinderungen beim Durchlaufen der Bewegungsbahnen auftreten. Darüber hinaus wird durch diese Anordnung unterstützt, daß das relativ größere der beiden Elemente nach außen verschwenkt wird. Darüber hinaus hat das Gegenelement (44) auch den größeren Schwenkweg zu durchlaufen, so daß ein größerer Bewegungsbereich benötigt wird.

## Patentansprüche

1. Vorrichtung zur Blasformung von Behältern (2), die mindestens eine Blasstation (3) zur Umformung von thermoplastischen spritzgegossenen Vorformlingen (1) in die Behälter (2) aufweist und bei der die Blasstation (3) mit mindestens zwei von Formträgern (19, 20) gehalterten Blasformsegmenten versehen ist und die Formträger relativ zueinander verschwenkbar angeordnet sind sowie bei der die Blasformsegmente in einem geschlossenen Zustand der Blasstation (3) entlang einer Trennebene (43) angeordnet und von mindestens einem Verriegelungselement (41) relativ zueinander fixiert sind, **dadurch gekennzeichnet, daß** das Verriegelungselement (41) verschwenkbar im Bereich des ersten Formträgers (20) angeordnet ist und daß das Verriegelungselement (41) ein Verriegelungsprofil (45) aufweist, das angepaßt zu einem Gegenprofil (46) ausgebildet ist, das im Bereich eines Gegenelementes (44) angeordnet ist, wobei sich das Gegenelement (44) mindestens bereichsweise im verriegelten Zustand ausgehend vom zweiten Formträger (19) in Richtung auf den ersten Formträger (20) und über die Trennebene (43) hinaus erstreckt.

2. Vorrichtung nach Anspruch 1, **dadurch gekennzeichnet, daß** das Gegenelement (44) starr mit dem zweiten Formträger (19) verbunden ist.

3. Vorrichtung nach Anspruch 1, **dadurch gekennzeichnet, daß** das Gegenelement (44) verschwenkbar mit dem zweiten Formträger (19) verbunden ist.

4. Vorrichtung nach einem der Ansprüche 1 bis 3, **dadurch gekennzeichnet, daß** das Verriegelungselement (41) hebelförmig ausgebildet ist.

5. Vorrichtung nach einem der Ansprüche 1 bis 3, **dadurch gekennzeichnet, daß** das Verriegelungselement (41) hakenförmig ausgebildet ist.

6. Vorrichtung nach einem der Ansprüche 1 bis 3, **dadurch gekennzeichnet, daß** das Verriegelungselement (41) als Profilplatte ausgebildet ist.

7. Vorrichtung nach einem der Ansprüche 1 bis 6, **dadurch gekennzeichnet, daß** das Gegenelement (44) hebelartig ausgebildet ist.

8. Vorrichtung nach einem der Ansprüche 1 bis 6, **dadurch gekennzeichnet, daß** das Gegenelement (44) hakenförmig ausgebildet ist.

9. Vorrichtung nach einem der Ansprüche 1 bis 6, **dadurch gekennzeichnet, daß** das Gegenelement (44) als Profilplatte ausgebildet ist.

10. Vorrichtung nach einem der Ansprüche 1 bis 9, **dadurch gekennzeichnet, daß** das Gegenprofil (46) als ein Lochprofil ausgebildet ist.

11. Vorrichtung nach einem der Ansprüche 1 bis 10, **dadurch gekennzeichnet, daß** das Verriegelungselement (41) um eine im wesentlichen vertikal verlaufende Schwenkachse (42) drehbeweglich angeordnet ist.

12. Vorrichtung nach einem der Ansprüche 1 bis 11, **dadurch gekennzeichnet, daß** das Gegenelement (44) um eine im wesentlichen in vertikaler Richtung angeordnete Schwenkachse (47) drehbeweglich angeordnet ist.

13. Vorrichtung nach einem der Ansprüche 1 bis 12, **dadurch gekennzeichnet, daß** einander zugewandte Kraftübertragungsflächen des Verriegelungselementes (41) und des Gegenelementes (44) in einer Umgebung einer räumlichen Verbindungsebene zwischen Längsachsen des Schwenklagers (42) des Verriegelungselementes (41) sowie des Schwenklagers (47) des Gegenelementes (44) angeordnet sind.

14. Vorrichtung nach einem der Ansprüche 1 bis 13, **dadurch gekennzeichnet, daß** das Verriegelungselement (41) und das Gegenelement (44) von mindestens einer Feder relativ zueinander verspannt sind.

15. Vorrichtung nach einem der Ansprüche 1 bis 14, **dadurch gekennzeichnet, daß** einander zugewandte Kraftübertragungsflächen des Verriegelungselementes (41) und des Gegenelementes (44) gekurvt konturiert sind.

16. Vorrichtung nach Anspruch 15, **dadurch gekennzeichnet, daß** die Kraftübertragungsflächen relativ zur Schwenkachse (42) des Verriegelungselementes (41) im wesentlichen konzentrisch angeordnet sind.

17. Vorrichtung nach einem der Ansprüche 1 bis 16, **dadurch gekennzeichnet, daß** die Formträger (19, 20) von mindestens einem Druckraum (50) relativ zueinander verspannbar sind.

18. Vorrichtung nach einem der Ansprüche 1 bis 17, **dadurch gekennzeichnet, daß** das Verriegelungselement (41) relativ zu einer dem zweiten Formträger (19) zugewandten Begrenzungsfläche des ersten Formträgers (20) überstandsfrei angeordnet ist.

19. Vorrichtung nach einem der Ansprüche 1 bis 18, **dadurch gekennzeichnet, daß** das Verriegelungselement (41) mit einer Kurvensteuerung gekoppelt ist.

20. Vorrichtung nach einem der Ansprüche 1 bis 18, **dadurch gekennzeichnet, daß** das Gegenelement (44) mit einer Kurvensteuerung gekoppelt ist.

## Claims

1. Device for blow moulding containers (2), comprising at least one blowing station (3) for moulding thermoplastic, injection moulded preforms (1) into containers (2), which blowing station (3) is provided with at least two blow mould segments retained by mould holders (19, 20), and the mould holders are disposed so that they are able to pivot relative to one another, and when the blowing station (3) is in a closed state the blow mould segments are disposed along a dividing plane (43) and are fixed relative to one another by means of at least one locking element (41), **characterised in that** the locking element (41) is mounted so as to be pivotable in the region of the first mould holder (20) and the locking element (41) has a lock profile (45) adapted to a complementary profile (46) disposed in the region of a complementary element (44), and at least certain regions of the complementary element (44) extend out from the second mould holder (19) in the direction towards the first mould holder (20) and beyond the dividing plane (43) in the locked state.

2. Device a claimed in claim 1, **characterised in that** the complementary element (44) is rigidly connected to the second mould holder (19).

3. Device as claimed in claim 1, **characterised in that** the complementary element (44) is pivotably connected to the second mould holder (19).

4. Device as claimed in one of claims 1 to 3, **characterised in that** the locking element (41) is of a lever-type design.

5. Device as claimed in one of claims 1 to 3, **characterised in that** the locking element (41) is of a hook-shaped design.

6. Device as claimed in one of claims 1 to 3, **characterised in that** the locking element (41) is provided in the form of a profiled plate.

7. Device as claimed in one of claims 1 to 6, **characterised in that** the complementary element (44) is of a lever-type design.

8. Device as claimed in one of claims 1 to 6, **characterised in that** the complementary element (44) is of a hook-shaped design.

9. Device as claimed in one of claims 1 to 6, **characterised in that** the complementary element (44) is provided in the form of a profiled plate.

10. Device as claimed in one of claims 1 to 9, **characterised in that** the complementary profile (46) is provided in form of a plate incorporating holes.

11. Device as claimed in one of claims 1 to 10, **characterised in that** the locking element (41) is mounted so as to move in rotation about an essentially vertically extending pivot axis (42).

12. Device as claimed in one of claims 1 to 11, **characterised in that** the complementary element (44) is mounted so as to move in rotation about a pivot axis (47) disposed essentially in the vertical direction.

13. Device as claimed in one of claims 1 to 12, **characterised in that** mutually facing force transmitting surfaces of the locking element (41) and of the complementary element (44) are disposed in an area around a spatial connecting plane between longitudinal axes of the pivot bearing (42) of the locking element (41) and of the pivot bearing (47) of the complementary element (44).

14. Device as claimed in one of claims 1 to 13, **characterised in that** the locking element (41) and the complementary element (44) are clamped relative to one another by means of at least one spring.

15. Device as claimed in one of claims 1 to 14, **characterised in that** mutually facing force transmitting surfaces of the locking element (41) and of the complementary element (44) have curved contours.

16. Device as claimed in claim 15, **characterised in that** the force transmitting surfaces are disposed essentially concentrically with respect to the pivot axis (42) of the locking element (41).

17. Device as claimed in one of claims 1 to 16, **characterised in that** the mould holders (19, 20) can be clamped relative to one another by means of at least one pressure chamber (50).

18. Device as claimed in one of claims 1 to 17, **characterised in that** the locking element (41) is disposed so that it does not extend beyond a boundary surface of the first mould holder (20) facing the second mould holder (19).

19. Device as claimed in one of claims 1 to 18, **characterised in that** the locking element (41) is coupled with a cam controller.

20. Device as claimed in one of claims 1 to 18, **characterised in that** the complementary element (44) is coupled with a cam controller.

## Revendications

1. Dispositif pour le soufflage de récipients (2), qui présente au moins un poste de soufflage (3) pour la transformation de préformes (1) thermoplastiques, moulées par injection, en récipients (2), et dans lequel le poste de soufflage (3) est pourvu, au moins, de deux segments de soufflage, maintenus par des supports de moules (19, 20), et les support de moules sont agencés à pivotement l'un par rapport à l'autre, et dans lequel, quand le poste de soufflage (3) est à l'état fermé, les segments de soufflage sont disposés le long d'un plan de séparation (43), et sont fixés l'un par rapport à l'autre par au moins un élément de verrouillage (41), **caractérisé en ce que** l'élément de verrouillage (41) est agencé, pivotant, dans la région du premier support de moule (20) et que l'élément de verrouillage (41) présente un profil de verrouillage (45) qui est adapté à un profil complémentaire (46) qui est disposé dans la région d'un élément complémentaire (44), l'élément complémentaire (44), à l'état verrouillé, s'étendant, au moins par sections, à partir du deuxième support de moule (19), en direction du premier support de moule (20), et au-delà du plan de séparation (43).

2. Dispositif selon la revendication 1, **caractérisé en ce que** l'élément complémentaire (44) est relié rigidement avec le deuxième support de moule (19).

3. Dispositif selon la revendication 1, **caractérisé en ce que** l'élément complémentaire (44) est relié en pivotement avec le deuxième support de moule (19).

4. Dispositif selon l'une des revendications 1 à 3, **caractérisé en ce que** l'élément de verrouillage (41) est conçu en forme de levier.

5. Dispositif selon l'une des revendications 1 à 3, **caractérisé en ce que** l'élément de verrouillage (41) est conçu en forme de crochet.

6. Dispositif selon l'une des revendications 1 à 3, **caractérisé en ce que** l'élément de verrouillage (41) est conçu en forme de plaque profilée.

7. Dispositif selon l'une des revendications 1 à 6, **caractérisé en ce que** l'élément complémentaire (44) est conçu en forme de levier.

8. Dispositif selon l'une des revendications 1 à 6, **caractérisé en ce que** l'élément complémentaire (44) est conçu en forme de crochet.

9. Dispositif selon l'une des revendications 1 à 6, **caractérisé en ce que** l'élément complémentaire (44) est conçu en forme de plaque profilée.

10. Dispositif selon l'une des revendications 1 à 9, **caractérisé en ce que** profil complémentaire (46) est conçu en forme de profil perforé.

11. Dispositif selon l'une des revendications 1 à 10, **caractérisé en ce que** l'élément de verrouillage (41) est agencé, mobile en rotation autour d'un axe de pivotement (42) sensiblement vertical.

12. Dispositif selon l'une des revendications 1 à 11, **caractérisé en ce que** l'élément complémentaire (44) est agencé, mobile en rotation autour d'un axe de pivotement (47) sensiblement vertical.

13. Dispositif selon l'une des revendications 1 à 12, **caractérisé en ce que** les surfaces de transfert de force de l'élément de verrouillage (41), orientées l'une vers l'autre, et l'élément complémentaire (44) sont agencées dans l'entourage d'un plan de liaison spatial entre des axes longitudinaux de l'axe de pivotement (42) du l'élément de verrouillage (41), ainsi que de l'axe de pivotement (47) de l'élément complémentaire (44).

14. Dispositif selon l'une des revendications 1 à 13, **caractérisé en ce que** l'élément de verrouillage (41) et l'élément complémentaire (44) sont mis sous contrainte l'un par rapport à l'autre, par au moins un ressort.

15. Dispositif selon l'une des revendications 1 à 14, **caractérisé en ce que** les surfaces de transfert de force de l'élément de verrouillage (41) et de l'élément complémentaire (44), orientées l'une vers l'autre, présentent des contours en forme de courbes.

16. Dispositif selon la revendication 15, **caractérisé en ce que** les surfaces de transfert de force sont agencée de manière sensiblement concentrique par rapport à l'axe de pivotement (42) de l'élément de verrouillage (41).

17. Dispositif selon l'une des revendications 1 à 16, **caractérisé en ce que** les supports de moules (19, 20) peuvent être mis sous contrainte l'un par rapport à l'autre, par au moins une chambre de pression (50).

18. Dispositif selon l'une des revendications 1 à 17, **caractérisé en ce que** l'élément de verrouillage (41) est agencé dépasser par rapport à une surface de limitation du premier support de moule (20) qui est orientée vers le deuxième support de moule (19).

19. Dispositif selon l'une des revendications 1 à 18, **caractérisé en ce que** l'élément de verrouillage (41) est couplé avec un organe de commande courbe.

20. Dispositif selon l'une des revendications 1 à 18, **caractérisé en ce que** l'élément complémentaire (44) est couplé avec un organe de commande courbe.
